# EUROPÄISCHE PATENTSCHRIFT

(11) **EP 3 553 352 B1**
(45) Veröffentlichungstag und Bekanntmachung des Hinweises auf die Patenterteilung: **25.10.2023**
(21) Anmeldenummer: 19167862.2
(22) Anmeldetag: 08.04.2019
(51) Int. Cl.: F16J 15/3216, F16J 15/3228, F16J 15/3248, F16J 15/3284

(54) **RADIALWELLENDICHTRING**
RADIAL SHAFT SEALING RING
JOINT RADIAL D'ÉTANCHÉITÉ D'ARBRE

(30) Priorität: 10.04.2018 DE 202018101936 U
(43) Veröffentlichungstag der Anmeldung: 16.10.2019
(73) Patentinhaber: VR Dichtungen GmbH, 52531 Übach-Palenberg (DE)
(72) Erfinder: Keulers, Patrick Johannes, 52066 Aachen (BE)
(74) Vertreter: Lippert Stachow Patentanwälte Rechtsanwälte

(56) Entgegenhaltungen:
- DE-A1- 1 475 727
- JP-A- 2017 089 756
- US-A1- 2013 187 342

## Beschreibung

Die Erfindung betrifft einen Radialwellendichtring mit einer elastomeren Manschette und einem Stützkörper, an dem die Manschette befestigt ist, wobei die Manschette und der Stützkörper eine axiale Wellendurchführung für eine mit dem Radialwellendichtring zusammenwirkende Welle aufweisen, die Manschette einen ringförmigen als Scheibe ausgebildeten Bereich aufweist, der sich radial zur Wellendurchführung erstreckt und an dessen radial innenliegendem Ende eine schräg gestellte Dichtlippe aufweist, die sich in die Wellendurchführung hinein erstreckt und bei Durchführung der Welle durch den Radialwellendichtring durch Berührung mit der Welle von dieser weg gebogen wird, wobei an der der Biegerichtung entgegen weisenden Seite der Manschette Dehnungskräfte längs eines Dehnungsbereichs der Manschette auftreten, wobei der als Scheibe ausgebildete Bereich der Manschette an der von der Dichtlippe weg weisenden Seite durch den Stützkörper längs eines Abstützungsbereichs abgestützt ist, wobei an der der Biegerichtung entgegen weisenden Seite der Manschette eine Schicht aus Fluorkunststoff angeordnet ist, die als eine Fluorkunststoffbeschichtung der Manschette ausgebildet ist oder aus einer Folie oder Membran mit darin eingebrachten Löchern oder aus einem Gewebe mit Löchern besteht.

Radialwellendichtringe der vorstehend genannten Art haben allgemein die Aufgabe, Wellendurchführungen abzudichten und dabei Medienströmungen aus Räumen höheren Druckes in Räume niedrigeren Druckes zu verhindern. Sie sind dazu so angeordnet, dass die Dichtlippe der Manschette zum Raum höheren Druckes weist. Sie haben in Abhängigkeit von ihrem Einsatzgebiet den Anforderungen optimaler Abdichtung, bei hohen Drehzahlen der Wellen, hohen Temperaturen des abzudichtenden Mediums, chemischer Beständigkeit und hoher Lebensdauer zu genügen.

Der Stützkörper kann eine zentrale Bohrung zur Bildung der Wellendurchführung aufweisen, deren Durchmesser ein geringes Übermaß in Bezug auf den Wellendurchmesser aufweist. Zwischen der Bohrung und der Welle ist somit ein geringer Spalt vorhanden, der durch die Dichtlippe der Manschette abgedeckt wird.

Aufgrund der Wellendurchführung sind die Lage des Radialwellendichtringes, insbesondere der Manschette, in Bezug auf die Welle und daher das Biegemaß der bei Berührung der Welle gebogenen Dichtlippe und somit der Dehnungsbereich der Manschette festgelegt.

Aufgrund der Biegung der Dichtlippe bei Berührung mit der Welle liegt sie auf der Welle mit einer Federkraft an.

Es ist bekannt, dass die Federkraft elastomerer Dichtungen aufgrund physikalischer Spannungsrelaxation über die Zeit abnimmt. Es wurde daher schon vorgeschlagen, in solchen Dichtungen Wurmfederlinge einzusetzen. Diese haben allerdings den Nachteil, dass sie nicht so hohe Drücke aufnehmen können und höhere Reibwerte aufweisen. Außerdem hat sich gezeigt, dass bei langen Standzeiten die Federwirkung bei derartigen Dichtungen ebenfalls abnimmt, was zu Leckagen führen kann.

Aus der US 2013/187342 A1 ist ein Radialwellendichtring mit einer als schräg gestellte Dichtlippe ausgebildeten Manschette bekannt, die in ihrem einen Endbereich an einem Stützkörper befestigt und durch diesen abgestützt wird und in ihrem anderen Endbereich eine Kontaktfläche zur Anlage an einer Welle aufweist. Damit die Dichtlippe im Kontakt mit der Welle bleibt, ist eine Ringbandfeder vorgesehen, die die Federlippe auf die Welle drückt. Die Dichtlippe kann aus einem elastomeren Material, insbesondere aus einem Fluorgummi bestehen. Um die Reibung zwischen der Kontaktfläche der Dichtlippe und der Welle zu reduzieren, kann die Dichtlippe mit einer Textur aus Vertiefungen versehen sein. Des Weiteren kann die Kontaktfläche mit einer abriebsfesten Beschichtung versehen sein, die nach dem Einbringen der Vertiefungen an der Kontaktfläche der Dichtlippe auf die Kontaktfläche aufgebracht wird, so dass sie die Vertiefungen ausfüttert.

Aus der JP 2017089756 A ist ein Radialwellendichtring der eingangs in der Beschreibungseinleitung genannten Art bekannt. Die Dichtlippe wird nach der Lehre dieses Dokuments durch eine Ringbandfeder gegen die Welle gedrückt, so dass an der zur Welle hin weisenden Seite der Manschette höchstens geringfügige über die Kontaktfläche der Dichtlippe hinausgehende Dehnungskräfte auftreten. Die Schicht aus Fluorkunststoff ist als eine lösbare Pulverbeschichtung an der zur Welle hin weisenden Seite der Dichtlippe über einen im Wesentlichen die Kontaktfläche der Dichtlippe mit der Welle umfassenden Teilbereich aufgetragen. Durch Reibung der Dichtlippe an der Welle löst sich die Pulverbeschichtung teilweise von der Kontaktfläche der Dichtlippe mit der Welle, so dass an der Kontaktfläche der Dichtlippe vertiefte Bereiche ausgebildet werden, die Schmieröl aufnehmen. Zusammen mit der glatten Restfläche der Kontaktfläche soll dadurch die Reibung zwischen der Dichtlippe und der Welle verringert werden.

Aus der DE 14 75 727 A1 ist ein Radialwellendichtring der eingangs genannten Art bekannt. Zur Herstellung des Dichtrings wird von einem zwischen zwei ringförmigen Stützkörpern eines Gehäuses eingespannten Lamellenpaket ausgegangen, das aus einer ringscheibenförmigen elastomeren Lamelle und einer ringscheibenförmigen Kunstharzlamelle besteht, die sich gegenseitig überdecken. In die zentrale Öffnung dieses ringscheibenförmigen Lamellenpakets wird ein erhitztes zapfenförmiges Teil, das als Bolzen oder Ziehdorn ausgebildet sein kann, derart eingeführt, dass das zapfenförmigen Teil mit der Kunstharzlamelle in Berührung kommt und diese und die elastomere Lamelle glockenförmig in die Gestalt des herzustellenden Dichtrings umbiegt. Die elastomere Lamelle weist dann einen weiterhin als Scheibe ausgebildeten Bereich und einen Dichtlippenbereich sowie einen sich in diese Bereiche erstreckenden, durch Kontakt mit einer Welle bewirkten Dehnungsbereich auf. Die Kunstharzlamelle erstreckt sich außenseitig über diese gesamten Bereiche, insbesondere über einen jenseits des Dehnungsbereichs angeordneten radial außenliegenden Bereich der elastomeren Lamelle, in dem beide Lamellen von den beiden Stützkörpern axial durch Druck zusammengehalten werden.

Der Einsatz eines unter hohem Druck stehenden Mediums erfordert eine sehr hohe Gasdichtheit zwischen dem Radialwellendichtring und der Welle. Bei höherer Druckbelastung wirkt ein höherer Anpressdruck der Dichtlippe auf die Welle, wodurch sich die Energieeffizienz durch eine höhere Reibung zwischen der Dichtlippe und der Welle verschlechtern kann.

Der vorliegenden Erfindung liegt die Aufgabe zugrunde, eine Spannungsrelaxation bei Membranen von Radialwellendichtringen der eingangs genannten Art langfristig optimal zu unterbinden und eine verbesserte Energieeffizienz selbst bei höherer Druckbelastung des Radialwellendichtrings zu gewährleisten.

Die Aufgabe wird erfindungsgemäß dadurch gelöst, dass sich der Dehnungsbereich der Manschette über die gesamte Erstreckung der Dichtlippe in den als Scheibe ausgebildeten Bereich der Manschette über einen vom Dehnungsbereich der Manschette umfassten Bereich hinein, aber nicht über den Bereich hinaus über die gesamte radiale Längserstreckung der Manschette.

Es hat sich herausgestellt, dass die sich über den gesamten Dehnungsbereich erstreckende Schicht aus Fluorkunststoff als verstärkende Feder auf die Manschette wirkt, wobei der bei elastomeren Manschetten auftretende Effekt der Spannungsrelaxation längerfristig unterbunden wird. Zusätzlich trägt die Fluorkunststoffbeschichtung, die sich im Dehnungsbereich der Manschette bis zur Kontaktfläche oder Kontaktlinie zwischen der Manschette und der Welle erstreckt, zur Optimierung der Reibung zwischen der Manschette und der Welle bei. Dadurch verbessert sich die Energieeffizienz des erfindungsgemäßen Radialwellendichtrings um einen erheblichen Faktor.

Aufgrund der tribologischen und reibungsphysikalischen Vorteile des erfindungsgemäßen Radialwellendichtrings kann die Dichtung sowohl im Trockenlauf oder bei Mangelschmierung, als auch für hochviskose Flüssigkeiten verwendet werden. Durch eine Änderung der Dicke der Fluorkunststoffbeschichtung und/oder der Stärke der Manschette kann die Steifigkeit der Dichtlippe für den Einsatz in Maschinen und Anlagen optimiert werden, die z. B. hohe Anforderungen gegen Wasser durch Dampfstrahlreinigung u. a. nach DIN EN 60529 erfüllen sollen. Ein weiterer Vorteil des erfindungsgemäßen Radialwellendichtrings ist darin zu sehen, dass bei gleichem Spalt zwischen dem Stützkörper und der Welle eine ca. 50 % höhere Druckbelastung des Dichtringes möglich ist. So lassen sich Dichtringe bis zu einem Druck von 225 bar verwenden.

Die Manschette kann auf den Stützkörper aufgezogen sein.

Die Schicht aus Fluorkunststoff kann aus PTFE (Polytetrafluorethylen) bestehen. Sie kann mit anorganischen Zusätzen, wie z. B. Bronze, Graphit, Molybdändisulfid oder Molybdän(IV)-sulfid, versehen sein.

Als elastomeres Material für die Manschette kommen alle technisch verfügbaren Elastomere, z. B. gemäß ISO-Bezeichnungen NBR, FKM, FFKM, EPDM, HNBR, VMQ, in Betracht.

Kombinationen verschiedener Elastomere für die Manschette und Fluorkunststoffe für die darauf angeordnete Schicht erlauben eine optimale Einstellung der Dichtung für vorgegebene Anwendungen.

Das erfindungsgemäße Konzept der Beschichtung einer elastomeren Manschette mit einer sich mindestens über den gesamten Dehnungsbereich der Manschette erstreckenden Schicht aus Fluorkunststoff lässt sich auch auf andere Arten elastomergespannter Radialwellendichtungen und Axialwellendichtungen anwenden.

Die Schicht aus Fluorkunststoff kann ausschließlich an der der Biegerichtung der Dichtlippe entgegen weisenden Seite der Manschette angeordnet sein.

Die Schicht aus Fluorkunststoff erstreckt sich an der der Biegerichtung der Dichtlippe entgegen weisenden Seite der Manschette ausschließlich über den Dehnungsbereich der Manschette.

Die Schicht aus Fluorkunststoff kann durch ein Vulkanisierungsverfahren auf der Manschette aufgebracht sein. Die Schicht aus Fluorkunststoff kann als Folie auf die Manschette aufgebracht sein.

Die Schicht aus Fluorkunststoff kann sich über den Dehnungsbereich der Manschette, aber nicht über die gesamte Längenerstreckung der Manschette längs des Stützkörpers erstrecken.

Die Folie kann zur Erlangung der erforderlichen Adhäsionsfähigkeit für die Verbindung mit der Manschette geätzt sein.

Die Schicht aus Fluorkunststoff kann aus einer Folie oder einer Membran mit darin eingebrachten Löchern oder aus einem

Dabei kann der Lochabstand zwischen 0,1 mm und 0,5 mm, vorzugsweise zwischen 0,02 mm und 0,2 mm, betragen.

Die Lochgröße kann zwischen 0,1 mm und 0,5 mm, vorzugsweise zwischen 0,02 mm und 0,2 mm, liegen.

Die gelochte Schicht oder das Gewebe kann durch Laserverfahren oder Laserinterferenz-Strukturierung hergestellt sein. Dabei können unterschiedliche Lochformen durch die Form des Laserstrahls erzeugt werden. Die Löcher können z. B. eine zylinderförmige, paraboloide oder im Querschnitt eckige Innenwandung aufweisen. Anstelle einer Folie können auch z. B. aus PTFE-Fasern gewebte Produkte bzw. Membranen verwendet werden.

Der Stützkörper kann aus beliebigen Eisenwerkstoffen, Buntmetallen oder hartelastischen Kunststoffen bestehen.

Er kann eine der Dichtlippe gegenüberliegende, diese an ihrer Unterseite unterstützende geneigte Stützfläche aufweisen.

Der Radialwellendichtring kann mehrere Manschetten mit Dichtlippen, insbesondere zwei Manschetten mit Dichtlippen, aufweisen. Durch unterschiedliche Wahl der Elastomere für die beiden Dichtlippen und der Beschichtung aus Fluorkunststoff können die Manschetten unterschiedliche Eigenschaften aufweisen.

Ein Ausführungsbeispiel der vorliegenden Erfindung wird im Folgenden näher beschrieben und in der Zeichnung dargestellt. In der Zeichnung zeigen:

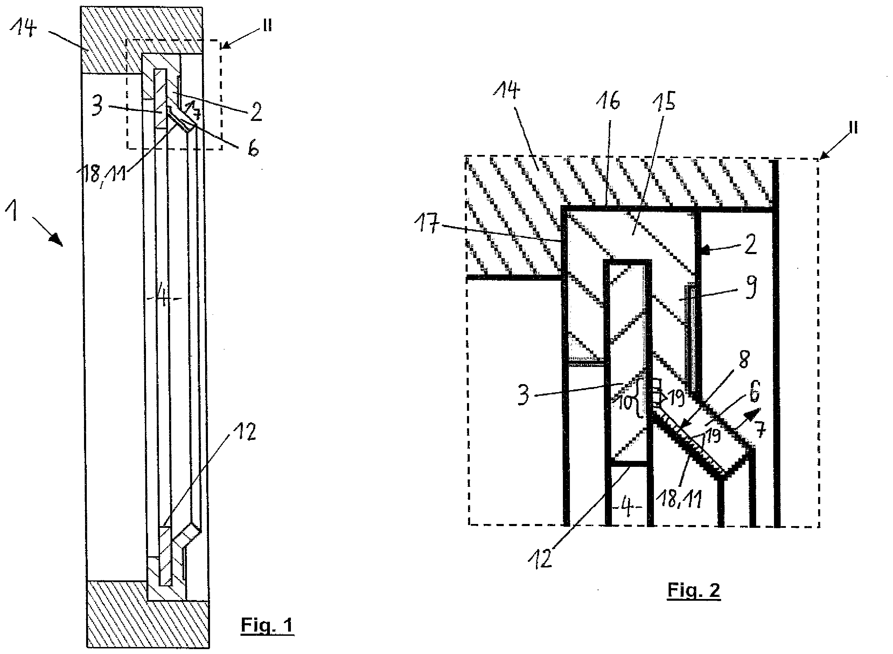

- Figur 1: einen radialen Längsschnitt durch einen Radialwellendichtring ohne Anordnung einer Welle in der Wellendurchführung,
- Figur 2: eine vergrößerte Darstellung des Bereichs II in Figur 1,
- Figur 3: einen radialen Längsschnitt durch den Radialwellendichtring mit einer in der Wellendurchführung eingesetzten Welle und
- Figur 4: eine vergrößerte Darstellung des Bereichs IV in Figur 3.

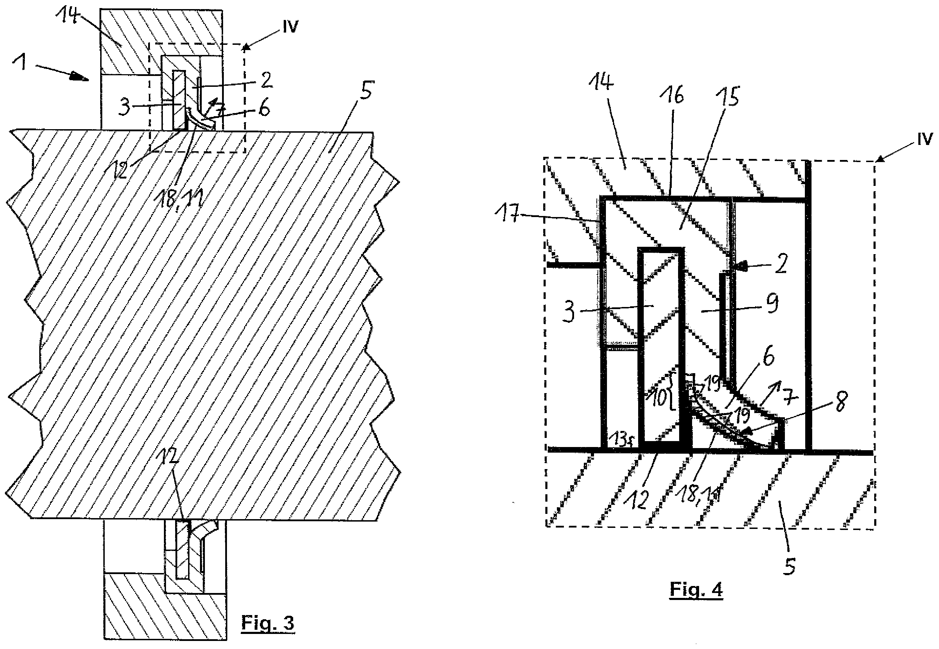

Wie aus der Zeichnung hervorgeht, weist der Radialwellendichtring 1 eine elastomere Manschette 2 und einen Stützkörper 3 auf, auf dem die Manschette 2 aufgezogen ist. Die Manschette 2 und der Stützkörper 3 weisen eine axiale Wellendurchführung 4 für eine mit dem Radialwellendichtring 1 zusammenwirkende Welle 5 auf, die in Figur 3 gezeigt ist.

Die Manschette 2 ist an ihrem radial innenliegenden Ende mit einer schräg gestellten Dichtlippe 6 versehen, die sich in die Wellendurchführung 4 hinein erstreckt und bei der in Figur 3 gezeigten Durchführung der Welle 5 durch den Radialwellendichtring 1 durch Berührung mit der Welle 5 von dieser weg gebogen wird. Dabei treten an der der Biegerichtung 7 entgegen weisenden Seite der Manschette 2 Dehnungskräfte längs eines Dehnungsbereichs 8 der Manschette 2 auf.

Die Dichtlippe 6 ist zu dem einen höheren Druck aufweisenden Raum, d. h. an der Druckseite des Radialwellendichtrings 1, hin schräg gestellt.

Wie aus der Zeichnung hervorgeht, weist die Manschette 2 einen ringförmigen als Scheibe ausgebildeten Bereich 9 auf, der sich radial zur Wellendurchführung 4 erstreckt und an dessen radial innenliegendem Ende die schräg gestellte Dichtlippe 6 angeordnet ist. Der als Scheibe ausgebildete Bereich 9 der Manschette liegt an seiner der Druckseite gegenüberliegenden Seite am Stützkörper 3 an.

Der Dehnungsbereich 8 der Manschette 2 erstreckt sich über die der Biegerichtung 7 entgegen weisende Seite der Manschette 2 längs der gesamten Erstreckung der Dichtlippe 6 in den scheibenförmigen Bereich 9 der Manschette 2 über einen Bereich 10 desselben hinein. Wird dieser vom Stützkörper 3, wie im hier beschriebenen Ausführungsbeispiel, abgestützt, so erstreckt sich der Dehnungsbereich 8 längs eines dem Bereich 10 entsprechenden Bereichs der Abstützungsfläche.

Wie aus der Zeichnung hervorgeht, ist an der der Biegerichtung 7 entgegen weisenden Seite der Manschette 2 eine sich über den gesamten Dehnungsbereich 8 erstreckende Schicht 11 aus Fluorkunststoff, im hier beschriebenen Ausführungsbeispiel PTFE, angeordnet. Die Schicht 11 erstreckt sich gemäß dem Dehnungsbereich 8 über die der Biegerichtung 7 entgegen weisende Seite der Manschette 2 längs der gesamten Erstreckung der Dichtlippe 6 in den scheibenförmigen Bereich 9 der Manschette 2 hinein und zwar längs des oben erwähnten Bereichs 10 der Manschette.

Die Schicht 11 aus Fluorkunststoff erstreckt sich jedoch nicht über den Bereich 10 des scheibenförmigen Bereichs 9 der Manschette 2 hinaus, da im übrigen Bereich der Manschette 2 keine nennenswerten Dehnungskräfte bei der Biegung der Manschette 2 durch Berührung mit der Welle 5 auftreten.

Der Stützkörper 3 weist eine zentrale Bohrung 12 auf, die, wie in Figur 4 gezeigt, mit der Welle 5 einen Spalt 13 bildet, der durch die Dichtlippe 6 abgedeckt ist.

Wie weiterhin aus der Zeichnung hervorgeht, ist der Stützkörper 3 mit der darauf aufgezogenen Manschette 2 in einem Lagergehäuse 14 angeordnet und liegt mit Hilfe eines Zentrierbereichs 15 an der Innenseite 16 und einer Planseite 17 des Lagergehäuses 14 an.

Die Schicht 11 aus Fluorkunststoff ist in Form einer Folie 18 oder einer Membran mit darin eingebrachten Löchern 19 oder aus einem Gewebe mit Löchern 19 ausgebildet. Die gelochte Schicht 11 oder das Gewebe ist durch Laserverfahren oder Laserinterferenz-Strukturierung hergestellt.

### Bezugszeichenliste

- 1: Radialwellendichtring
- 2: Manschette
- 3: Stützkörper
- 4: Wellendurchführung
- 5: Welle
- 6: Dichtlippe
- 7: Biegerichtung
- 8: Dehnungsbereich
- 9: Bereich
- 10: Bereich
- 11: Schicht
- 12: Bohrung
- 13: Spalt
- 14: Lagergehäuse
- 15: Zentrierbereich
- 16: Innenseite
- 17: Planseite
- 18: Folie
- 19: Loch

## Patentansprüche

1. Radialwellendichtring (1) mit einer elastomeren Manschette (2) und einem Stützkörper (3), an dem die Manschette (2) befestigt ist, wobei die Manschette (2) und der Stützkörper (3) eine axiale Wellendurchführung (4) für eine mit dem Radialwellendichtring zusammenwirkende Welle (5) aufweisen, die Manschette (2) einen ringförmigen als Scheibe ausgebildeten Bereich (9) aufweist, der sich radial zur Wellendurchführung (4) erstreckt und an dessen radial innenliegendem Ende eine schräg gestellte Dichtlippe (6) aufweist, die sich in die Wellendurchführung (4) hinein erstreckt und bei Durchführung der Welle durch den Radialwellendichtring (1) durch Berührung mit der Welle (5) von dieser weg gebogen wird, wobei an der der Biegerichtung (7) entgegen weisenden Seite der Manschette (2) längs eines Dehnungsbereichs (8) der Manschette (2) Dehnungskräfte auftreten, wobei der als Scheibe ausgebildete Bereich (9) der Manschette (2) an der von der Dichtlippe (6) weg weisenden Seite durch den Stützkörper (3) abgestützt ist, wobei an der der Biegerichtung (7) entgegen weisenden Seite der Manschette (2) eine sich über den gesamten Dehnungsbereich (8) erstreckende Schicht (11) aus Fluorkunststoff angeordnet ist, die als eine Fluorkunststoffbeschichtung der Manschette (2) ausgebildet ist oder aus einer Folie (18) oder Membran mit darin eingebrachten Löchern (19) oder aus einem Gewebe mit Löchern besteht, **dadurch gekennzeichnet, dass** sich die Schicht (11) aus Fluorkunststoff längs der gesamten Erstreckung der Dichtlippe (6) in den als Scheibe ausgebildeten Bereich (9) der Manschette (2) über einen vom Dehnungsbereich der Manschette (2) umfassten Bereich (10) hinein erstreckt, aber nicht über den Bereich (10) hinaus über die gesamte radiale Längenerstreckung der Manschette (2).

2. Radialwellendichtring (1) nach Anspruch 1, **dadurch gekennzeichnet, dass** die Schicht (11) aus PTFE besteht.

3. Radialwellendichtring (1) nach Anspruch 1 oder 2, **dadurch gekennzeichnet, dass** die Schicht (11) aus Fluorkunststoff ausschließlich an der entgegen der Biegerichtung (7) weisenden Seite der Manschette (2) angeordnet ist.

4. Radialwellendichtring (1) nach einem der Ansprüche 1-3, **dadurch gekennzeichnet, dass** die Schicht (11) aus Fluorkunststoff sich an der entgegen der Biegerichtung (7) weisenden Seite der Manschette (2) ausschließlich über den Dehnungsbereich (8) der Manschette (2) erstreckt.

5. Radialwellendichtring (1) nach einem der Ansprüche 1-4, wobei die Schicht (11) aus einer Fluorkunststoffbeschichtung der Manschette (2) ausgebildet ist, **dadurch gekennzeichnet, dass** die Schicht (11) aus Fluorkunststoff durch ein Vulkanisierungsverfahren auf der Manschette (2) aufgebracht ist.

6. Radialwellendichtung (1) nach einem der Ansprüche 1-4, wobei die Schicht (11) aus Fluorkunststoff aus einer Folie (18) oder Membran mit darin eingebrachten Löchern (19) oder aus einem Gewebe mit Löchern besteht, **dadurch gekennzeichnet, dass** der Lochabstand zwischen 0,02 mm und 0,2 mm beträgt.

7. Radialwellendichtring (1) nach Anspruch 6, **dadurch gekennzeichnet, dass** die Lochgröße zwischen 0,02 mm und 0,2 mm beträgt.

8. Radialwellendichtring nach Anspruch 6 oder 7, **dadurch gekennzeichnet, dass** die gelochte Schicht (11) oder das Gewebe durch Laserverfahren oder Laserinterferenz-Strukturierung hergestellt ist.

9. Radialwellendichtring (1) nach einem der Ansprüche 1-8, **dadurch gekennzeichnet, dass** die Manschette (2) auf den Stützkörper (3) aufgezogen ist.

10. Radialwellendichtung (1) nach einem der Ansprüche 1-9, **dadurch gekennzeichnet, dass** der Stützkörper eine der Dichtlippe gegenüberliegende, zur Wandung der Bohrung geneigte Stützfläche aufweist.

11. Radialwellendichtring, der zwei Stützkörper und zwei Manschetten nach einem der Ansprüche 1-10 umfasst.

12. Radialwellendichtring nach Anspruch 11, **dadurch gekennzeichnet, dass** die Schichten aus Fluorkunststoff der beiden Manschetten unterschiedliche chemische und/oder physikalische Eigenschaften aufweisen.

## Claims

1. Radial shaft sealing ring (1) comprising an elastomeric sleeve (2) and a support body (3) to which the sleeve (2) is fixed, wherein the sleeve (2) and the support body (3) include an axial shaft feedthrough (4) for a shaft (5) cooperating with the radial shaft sealing ring, wherein the sleeve (2) comprises an annular region (9) formed as a disk which extends radially to the shaft feedthrough (4) and has on the radially inner end thereof an inclined sealing lip (6) which extends into shaft feedthrough (4) and which is bent away from the shaft (5) by contact with the shaft when the shaft is passed through the radial shaft sealing ring (1), wherein expansion forces occur on the side of the sleeve (2) facing in the opposite direction to the bending direction (7) along an expansion zone (8) of the sleeve (2), wherein the region (9) of the sleeve (2) formed as a disk is supported on the side facing away from the sealing lip (6) by the support body (3), wherein on the side of the sleeve (2) facing in the opposite direction to the bending direction (7), a layer (11) of fluoroplastic extending over the entire expansion zone (8) is arranged which is configured as a fluoroplastic coating of the sleeve (2) or consists of a film (18) or a membrane with holes (19) therein or a fabric with holes, **characterized in that** the layer (11) of fluoroplastic extends along the entire extension of the sealing lip (6) into the region (9) of the sleeve (2), which is designed as a disc, over a region (10) encompassed by the expansion zone of the sleeve (2), but does not extend over the entire radial longitudinal extent of the sleeve (2) beyond the region (10).

2. Radial shaft sealing ring (1) according to claim 1, **characterized in that** the layer (11) consists of PRFE.

3. Radial shaft sealing ring (1) according to claim 1 or 2, **characterized in that** the layer (11) of fluoroplastic is arranged exclusively on the side of the sleeve (2) facing in the opposite direction to the bending direction (7).

4. Radial shaft sealing ring (1) according to any one of claims 1-3, **characterized in that** layer (11) of fluoroplastic extends exclusively over the expansion zone (8) of the sleeve (2) on the side of the sleeve (2) facing in the opposite direction to the bending direction (7).

5. Radial shaft sealing ring (1) according to any one of claims 1-4, wherein the layer (11) is formed of a fluoroplastic coating of the sleeve (2), **characterized in that** the layer (11) of fluoroplastic is applied to the sleeve (2) by a vulcanization process.

6. Radial shaft sealing ring (1) according to any one of claims 1-4, wherein the layer (11) of fluoroplastic consists of a film (18) or a membrane with holes (19) made therein or a fabric with holes, **characterized in that** the hole distance is between 0.02 mm and 0.2 mm.

7. Radial shaft sealing ring (1) according to claim 6, **characterized in that** hole size is between 0.02 mm and 0.2 mm.

8. Radial shaft sealing ring (1), **characterized in that** the perforated layer (11) or the fabric are produced using a laser process or laser interference texturing.

9. Radial shaft sealing ring (1) according to any one of claims 1-8, **characterized in that** the sleeve (2) is sleeved onto the support body (3).

10. Radial shaft sealing ring (1) according to any one of claims 1-9, **characterized in that** the support body includes a supporting surface opposite the sealing lip and inclined to the wall of the bore.

11. Radial shaft sealing ring (1), which comprises two support bodies and two sleeves according to any one of claims 1-10.

12. Radial shaft sealing ring according to claim 11, **characterized in that** the layers of fluoroplastic of the two sleeves have different chemical and/or physical properties.

## Revendications

1. Joint radial d'étanchéité d'arbre (1) comprenant un manchon élastomère (2) et un corps de support (3) auquel le manchon (2) est fixé, dans lequel le manchon (2) et le corps de support (3) comprennent une traversée d'arbre axiale (4) pour un arbre (5) coopérant avec le joint radial d'étanchéité d'arbre, dans lequel le manchon (2) comprend une région annulaire (9) formée comme un disque qui s'étend radialement jusqu'à la traversée d'arbre (4) et a sur son extrémité radialement intérieure une lèvre d'étanchéité inclinée (6) qui s'étend dans la traversée d'arbre (4) et qui est pliée loin de l'arbre (5) par contact avec l'arbre lorsque l'arbre est passé à travers le joint radial d'étanchéité d'arbre (1), dans lequel les forces d'expansion se produisent sur le côté du manchon (2) orienté dans la direction opposée à la direction de flexion (7) le long d'une zone d'expansion (8) du manchon (2), dans lequel la région (9) du manchon (2) formée comme un disque est soutenue sur le côté opposé à la lèvre d'étanchéité (6) par le corps de support (3), dans lequel sur le côté du manchon (2) orienté dans la direction opposée à la direction de flexion (7), une couche (11) de plastique fluoré s'étendant sur toute la zone d'expansion (8) est disposée, configurée comme un revêtement en plastique fluoré du manchon (2) ou consiste en un film (18) ou une membrane avec des trous (19) à l'intérieur, ou un tissu avec des trous, **caractérisé en ce que** la couche (11) de plastique fluoré s'étend sur toute la longueur de la lèvre d'étanchéité (6) dans la zone (9) du manchon (2), qui est conçue comme un disque, sur une zone (10) englobée par la zone d'expansion du manchon (2), mais ne s'étend pas sur toute l'étendue longitudinale radiale du manchon (2) au-delà de la zone (10).

2. Joint radial d'étanchéité d'arbre (1) selon la revendication 1, **caractérisé en ce que** la couche (11) est constituée de PRFE.

3. Joint radial d'étanchéité d'arbre (1) selon la revendication 1 ou 2, **caractérisé en ce que** la couche (11) de plastique fluoré est disposée exclusivement sur le côté du manchon (2) orienté dans la direction opposée à la direction de flexion (7).

4. Joint radial d'étanchéité d'arbre (1) selon l'une quelconque des revendications 1 à 3, **caractérisé en ce que** la couche (11) de plastique fluoré s'étend exclusivement sur la zone d'expansion (8) du manchon (2) sur le côté du manchon (2) orienté dans la direction opposée à la direction de flexion (7).

5. Joint radial d'étanchéité d'arbre (1) selon l'une quelconque des revendications 1 à 4, dans lequel la couche (11) est formée d'un revêtement en plastique fluoré du manchon (2), **caractérisé en ce que** la couche (11) de plastique fluoré est appliquée sur le manchon (2) par un processus de vulcanisation.

6. Joint radial d'étanchéité d'arbre (1) selon l'une quelconque des revendications 1 à 4, dans lequel la couche (11) de plastique fluoré est constituée d'un film (18) ou d'une membrane percée de trous (19) ou d'un tissu percé de trous, **caractérisé en ce que** la distance entre les trous est comprise entre 0,02 mm et 0,2 mm.

7. Joint radial d'étanchéité d'arbre (1) selon la revendication 6, **caractérisé en ce que** la taille des trous est comprise entre 0,02 mm et 0,2 mm.

8. Joint radial d'étanchéité d'arbre (1), **caractérisé en ce que** la couche perforée (11) ou le tissu sont produits à l'aide d'un procédé laser ou d'une texturation par interférence laser.

9. Joint radial d'étanchéité d'arbre (1) selon l'une quelconque des revendications 1 à 8, **caractérisé en ce que** le manchon (2) est manchonné sur le corps de support (3).

10. Joint radial d'étanchéité d'arbre (1) selon l'une quelconque des revendications 1 à 9, **caractérisé en ce que** le corps de support comprend une surface d'appui opposée à la lèvre d'étanchéité et inclinée par rapport à la paroi de l'alésage.

11. Joint radial d'étanchéité d'arbre (1) comprenant deux corps de support et deux manchons selon l'une quelconque des revendications 1-10.

12. Joint radial d'étanchéité d'arbre selon la revendication 11, **caractérisé en ce que** les couches de plastique fluoré des deux manchons ont des propriétés chimiques et/ou physiques différentes.
